# EUROPEAN PATENT APPLICATION

(11) **EP 1 569 290 A1**
(43) Date of publication of application: **31.08.2005**
(21) Application number: 03772695.7
(22) Date of filing: 12.11.2003
(51) Int. Cl.: H01M 4/90, H01M 4/96

(54) **CATALYST FOR FUEL CELL AND ELECTRODE USING THE SAME**

(30) Priority: 13.11.2002 JP 2002329484
(71) Applicant: National Institute of Advanced Industrial Science and Technology, Tokyo 100-8921 (JP)
(72) Inventor: NAKAJIMA, H., Nat. Inst. Adv. Ind. Sci. and Tech., Tsukuba-shi, Ibaraki 305-8568 (JP); HOMMA, I., Nat. Inst. Adv. Ind. Sci. and Tech., Tsukuba-shi, Ibaraki 305-8568 (JP)
(74) Representative: Zimmermann, Gerd Heinrich
(86) International application number: PCT/JP2003/014359
(87) International publication number: WO 2004/045009

(57) **Abstract**

The present invention provides a catalyst for a fuel cell with excellent resistance for poisoning gas such as CO and the electrode using the same, and a high performance catalyst for a direct methanol-type fuel cell using methanol as fuel and the electrode using the same. For this purpose, the present invention uses a solid heteropolyacid catalyst for a fuel cell which is a partial salt of a heteropolyacid including a noble metal and/or a transition metal and having a molecular weight of 800 to 10000.

## Description

### FIELD OF THE INVENTION

The present invention relates to a catalyst capable of estranging molecular hydrogen into atomic hydrogen and changing hydrogen atoms into protons in a fuel cell, and a material using the catalyst adaptable to the electrode for the fuel cell.

More particularly, the present invention relates to the catalyst with excellent CO poisoning resistance and excellent methanol oxidizing property which is solid polyacid substitutively doped with a noble metal such as Ru, Rh, Pd, Ag, Ir, Pt and Au, and a transition metal such as Ti, V, Cr, Mn, Fe, Co, Ni, Cu, Zn, Y, Zr, Nb, Mo, Ta, W in their atomic level in lattices of molecules of a metal oxide having various structures and forms, e.g. solid metal oxide with a molecular weight of 800 to 10,000 containing the Keggin structure ([XM₁₂O₄₀]ⁿ⁻), the Dawson structure ([X₂M₁₈O₆₂]ⁿ⁻) or the Anderson structure ([M₇O₂₄]ⁿ⁻), and a material using the catalyst adaptable to the electrode of the fuel cell.

### BACKGROUND ART

Attention has been attracted to a solid polymer fuel cell as a high energy conversion efficiency device in a next generation. Practical use of the fuel cell with a higher energy conversion efficiency than that of an internal combustion engine has been demanded as the last resort for an electric vehicle or installed power source. For practical use of the fuel cell as industrial technology, it is necessary to use fossil fuels with versatility. For example, the solid polymer fuel cell using fuels as methanol or natural gas has been demanded. However, in the case of using the fossil fuels, carbon monoxide (CO) contained in reformed gas, even with the concentration of several ppm, is highly adsorbed on the surface of the catalyst of a platinum electrode to hinder hydrogen oxidation reaction. For this reason, it is necessary to reduce the concentration of CO to a low level in the reforming system. But this gives rise to the complication of the system or reduction in the response to load change. These factors lead to a cost increase, reliability deterioration, etc. and also provide causes of hindering the practical use of the fuel cell technology. As a technology of solving these problems, a PtRu catalyst in which platinum (Pt) is alloyed with Ru in order to improve the CO resistance of the platinum catalyst has been widely used. However a new catalytic electrode having CO with higher concentration has been demanded.

On the other hand, in recent years, with development of a mobile electronic device, a power source with a higher energy density has been demanded. Since the energy capacity of a lithium battery is limited by its theoretical density, as an energy density power source exceeding it, a direct methanol-type fuel cells (Direct Methanol Fuel Cells) which use methanol as a fuel have received much attention. Actually, the direct methanol fuel cells, in which the methanol fuel is directly six-electron oxidized at the anode, provide a large over-voltage, and also a low conversion efficiency because of the low reaction rate of methanol at a low temperature.

Further, the direct methanol fuels cells present various problems in practical use such as reduction in the conversion efficiency and discharge of harmful substances owing to adsorption of formic acid or formaldehyde as a reaction intermediate on an electrode surface and their diffusion toward the cathode. Presently, the catalytic electrode capable of oxidizing methanol at a lower over-voltage and higher reaction rate is demanded.

Development of a catalytic electrode is demanded which has performances expected as these catalytic electrodes for the polymer fuel cell, i.e., CO resistance or methanol oxidation. Actually, research is being carried out on the alloy of platinum and other transition metals, e.g., PtRu, PtSn, PtFe, PtNi, PtCo and PtV, and a metal/oxide composite electrode carrying platinum particles on the surface of a transition metal oxide. However, the catalytic electrode having an expected performance has not yet been developed. New catalytic electrodes are demanded which endures CO with higher concentration and exhibit good catalytic activity for the methanol oxidation.

The structure itself of heteropolyacid employed in the present invention is known from, e.g., U. Lee, A. Kobayashi and Y. Sasaki, Acta Cryst., C40, 5 (1984).

The present inventors have made eager investigation to examine the problem. As a result, they have composed new solid polyacid substitutively doped with Pt or Ru as noble metal atoms having a catalytic function in poly-anion lattices of heteropolyacid such as 12-tungstophosphoric acid (H₃PW₁₂O₄₀) and polyacid containing no hetero atom, and found its catalytic activity as a fuel cell electrode.

For example, where the tungsten (W) site in the polianion skeleton of 12-tungstophosphoric acid (H₃PW₁₂O₄₀) is substitutively doped with one atom of platinum (Pt), solid polyacid in which a platinum atom is substituted for only one of 12 tungsten atoms is composed. These Pt atoms have the same orientation structure and chemical status in the oxide molecule of any solid polyacid, and a characteristic structure in which all the Pt atoms are exposed to the polyacid surface.

The Pt atoms in these polyacids, unlike the Pt atoms in the metallic status, have a specific chemical combining status taken into the polyacid skeleton and so have a possibility of acting as peculiar catalytic active points. In addition, because all the Pt atoms are exposed to the polyacid surface, the Pt atoms are used at a high rate so that the used amount of Pt which is problematic in the fuel cell electrode may be greatly reduced. Further, the polyacid itself has high acidity and high proton conductivity, and further contains a large number of atoms with high oxidation numbers and oxidation-reduction capability such as tungsten and molybdenum. This may be advantageous for the adsorbed CO and oxidation reaction of the methanol.

Specifically, even if the Pt on the polyacid surface has adsorption species such as CO, since the surface has the proton conductivity, the reaction of CO and OH or proton is promoted so that the CO poisoning resistance may be reduced. Further, the oxidation reaction due to hydrogen extraction in formic acid (HCOOH) that is a reaction intermediate of the methanol oxidation is also promoted so that the oxidation of these adsorption species is promoted. As a result, improvement of the electrode performance such as improvement of a methanol reacting rate and reduction in the over-voltage can be expected.

It is known that the solid polyacid, substitutively doped with noble metal such as Ru, Rh, Pd, Ag, Ir, Pt and Au, and transition metal such as Ti, V, Cr, Mn, Fe, Co, Ni, Cu, Zn, Y, Zr, Nb, Mo, Ta, W in their atomic level in lattices of the polyacid, exhibits high activity for various oxidation reactions, for example it exhibits high activity for the epoxidation reaction of olefin by oxygen molecules (Y. Nishiyama, Y. Nakagawa, and N. Mizuno, Angew. Chem. Int. Ed. 2001, 40, 3639).

However, such solid polyacid has not almost been researched as the electrode catalyst. In particular, the solid acid doped with the noble metal such as Pt contains Pt atoms as catalytic active points in its skeleton and the polyacid itself has high acidity, proton conductivity and electron conductivity due to the presence of substituted atoms. For this reason, the above polyacid have a possibility of being served as the catalytic electrode having a peculiar catalytic function.

Since the electron conductivity is improved due to the presence of substituted atoms as described above, the above solid polyacid has a fundamental function as an electrode material. In addition, since the reaction between CO existing on the Pt atom or reaction intermediate species and the hydroxyl group (OH) or proton existing in the neighboring region is promoted, the above solid polyacid has a possibility of being made as the catalytic electrode with a remarkably improved CO poisoning resistance characteristic and excellent methanol oxidation characteristic.

Further, in the platinum metallic particles, the atoms within the particle does not participate in the reaction but only the Pt atoms existing on the surface contributes to the catalytic reaction so that the Pt using rate is not improved. On the other hand, all the Pt atoms put in the solid polyacid are active and contribute to the catalytic reaction so that dramatic improvement of the Pt using rate can be expected.

The solid polyacid substitutively doped with hetero atoms, e.g., Pt in its skeleton, which is made according to the present invention, is expected as a high performance catalytic electrode having both the peculiar catalytic characteristic and high Pt using rate.

### DISCLOSURE OF THE INVENTION

The present invention synthesize by a wet process and uses it as a catalytic electrode for a fuel cell. For example, in the case of 12-tungstophosphoric acid, the solid polyacid substitutively doped with Pt atoms is made by making a defective structure (11. tungstophosphoric acid) through suitable PH adjustment and inserting Pt atoms in the defective site.

There are few examples in which the heteropolyacid containing the noble metal composed according to the present invention is applied to an electrochemical oxidation-reduction reaction catalyst. There are many kinds of heteropolyacid that are stable under an oxidation condition. The heteropolyacid is also advantageous as the electrode catalyst for the fuel cell, and unlike the mixed catalyst of the noble metal and oxide, has a noble metal element and a non-noble metal element arranged in a site-controlled status. For this reason, improvement of the reaction rate can be expected.

In the present invention, such heteropolyacid containing the noble metal is synthesized and its characteristic as a catalyst for the fuel cell electrode has been found. According to the present invention, its performance as the catalytic electrode has been demonstrated by investigating the methanol oxidation reaction that can be measured by a simple technique.

### BRIEF DESCRIPTION OF THE DRAWINGS

Fig. 1 shows a model of a heteropolyacid (Anderson structure).
Fig. 2 shows a cyclic voltammogram pattern of the Pt-substituted Anderson type polyacid (Example 1).
Fig. 3 shows a cyclic voltammogram pattern of the heteropolyacid according to Example 1-2.
Fig. 4 shows a XRD pattern of the heteropolyacid (Na₅H₃[PtW₆O₂₄].xH₂O annealed at 70 °C) according to Example 1.
Fig. 5 shows an IR spectrum of the heteropolyacid according to Example 1 (Na₅H₃[PtW₆O₂₄].xH₂O).
Fig. 6 shows a moving radius structure function acquired by EXAFS of the molybdenum-containing substance Na₅H₃[PtMo₆O₂₄].xH₂O(having the same structure as that of the heteropolyacid according to Example 1).
Fig. 7 shows a cyclic voltammogram pattern of the heteropolyacid according to Example 2 ((TBA)₄H₂SiPtW₁₁O₄₀/acetylene black) .
Fig. 8 shows a model of a heteropolyacid (α-Keggin structure 1 defector).
Fig. 9 shows an IR spectrum of the heteropolyacid (3) according to Example 2.
Fig. 10 shows a powder XRD pattern of the heteropolyacid according to Example 2.
Fig. 11 shows a cyclic voltammogram pattern of each heteropolyacid according to Example 3.
Fig. 12 shows a cyclic voltammogram pattern of each heteropolyacid according to Example 3 (where methanol is not contained).
Fig. 13 shows an UV spectrum of each heteropolyacid according to Example 3.
Fig. 14 shows a ¹⁸⁹WNMR spectrum of the heteropolyacid (5) according to Example 3.
Fig. 15 shows a model of a heteropolyacid (γ-Keggin structure 2 defector).
Fig. 16 shows a cyclic voltammogram pattern of each heteropolyacid according to Example 4.
Fig. 17 shows a cyclic voltammogram pattern of each heteropolyacid according to Example 5.
Fig. 18 shows a cyclic voltammogram pattern of the PtRu alloy particle (Comparative Example 1).
Fig. 19 shows a cyclic voltammogram pattern of the Pt particle (particle diameter of 1 µm, Comparative Example 2).

### BEST MODE FOR CARRYING OUT THE INVENTION

The solid heteropolyacid used in the present invention is required to be non-soluble in an electrolyte. Therefore the solid heteropolyacid is preferably a partial salt of the heteropolyacid.

Examples of the partial salt include a partial salt with an alkali metal or an alkali earth metal, a partial salt with an organic ammonium ion or a partial salt insolubilized in water by the salt formation with a general cation (positive ion).

Further, the solid heteropolyacid catalyst for a fuel cell, which is held on a surface of a carbon electrode, can be used an electrode for a fuel cell. An organic binder or an inorganic binder can be used when holding the catalyst on the surface.

A mixture of the solid heteropolyacid catalyst for the fuel cell, conductive powder and a binder can be molded.

Examples of the organic binder employed in this case include known adhesive polymers such as polyamide resin, polyimide resin, polyester resin, epoxy resin, phenol resin and silicone resin.

Examples of the inorganic binder include known inorganic adhesives such as silica and hydrous glass. The content of the binder can be suitably determined according to a purpose.

Further, in order to mold the mixture of the solid heteropolyacid catalyst for a fuel cell, conductive powder and binder, known molding techniques such as extrusion molding, injection molding and flow molding can be adopted.

The Embodiments for carrying out the present invention can be summarized as follows.
(1) A solid heteropolyacid catalyst for a fuel cell, which is a partial salt of a heteropolyacid including a noble metal and/or a transition metal and having a molecular weight of 800 to 10000.
(2) The solid heteropolyacid catalyst for a fuel cell according to item 1, wherein the noble metal is at least one selected from the group consisting of Ru, Rh, Pd, Ag, Ir, Pt and Au, and the transition metal is at least one selected from the group consisting of Ti, V, Cr, Mn, Fe, Co, Ni, Cu, Zn, Y, Zr, Nb, Mo, Ta and W.
(3) The solid heteropolyacid catalyst for a fuel cell according to item 1 or 2, wherein the partial salt is a partial salt with an alkali metal or an alkali earth metal, a partial salt with an organic ammonium ion, or a partial salt insolubilized in water by a salt formation with a general cation (positive ion).
(4) The solid heteropolyacid catalyst for a fuel cell according to any one of items 1 to 3, wherein the heteropolyacid is a polyacid having the Keggin structure, the Anderson structure or the Dawson structure.
(5) The solid heteropolyacid catalyst for a fuel cell according to any one of items 1 to 4, wherein one atom of the noble metal is substituted in a skeleton of the heteropolyacid.
(6) The solid heteropolyacid catalyst for a fuel cell according to item 5, wherein the atom of the noble metal is one selected from the group consisting of Ru, Rh, Pd, Ag, Ir, Pt and Au.
(7) An electrode for a fuel cell characterized in that the solid heteropolyacid for a fuel cell according to any one of items 1 to 6 is held on a surface of a carbon electrode.
(8) An electrode for a fuel cell characterized in that a mixture of the solid heteropolyacid for a fuel cell according to any one of items 1 to 6, conductive powder and a binder is molded.
(9) The electrode for a fuel cell according to item 8, wherein the conductive powder is carbon powder or metal powder.
(10) The electrode for a fuel cell according to item 8 or 9, wherein the binder is an organic polymer binder and/or an inorganic binder.

### Example 1

### Evaluation of structure, and Performance as catalyst of Noble-metal-atom substituted heteropolyacid

In the present invention, the noble-metal-atom substituted heteropolyacid of the kind set forth below was prepared. The evaluation of structure of the noble-metal-atom substituted heteropolyacid was carried out by the technique such as the infrared absorption, the X-ray diffraction analysis (XRD) and the X-ray absorption edge fine structure (EXAFS). Its characteristic as an electrochemical oxidation catalyst was investigated through the electrochemical methanol oxidation reaction in a solution.

### Na₅H₃[PtW₆O₂₄] .xH₂O (Anderson structure) (prepared by the inventors of the present invention)

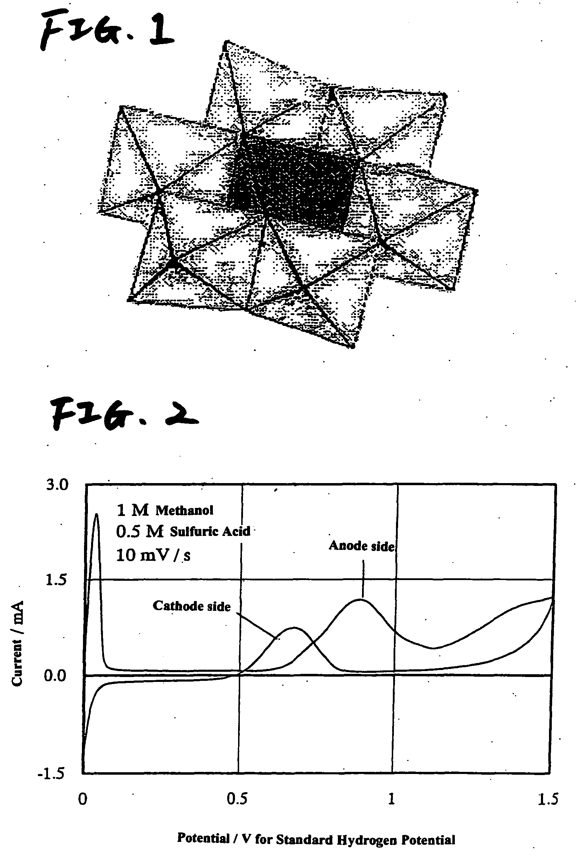

According to the reference (U. Lee, A. Kobayashi and Y. Sasaki, Acta Cryst., C40, 5(1984)), preparation was made by the following procedure. Namely, the compound having the Anderson structure as shown in Fig. 1 was made through the following procedure.

K₂Pt(OH)₆(available from Aldrich Corporation) was solved in water. Slight KOH was added. The solution was filtered by a 0.1 µm filter. This solution was added to a tungstic acid potassium solution, and thereafter HNO₃ was dropped to provide pH = 5.98. When the solution was added for about one hour, a slight amount of precipitate was created on the bottom of the solution. By filtering, a large amount of yellow-white precipitate was deposited in the solution. This precipitate was not solved even when the solution was heated again. At room temperature, the solution was left during one day. On the next day, KOH was added to the solution to provide pH = 7.5. The solution was put in a refrigerator. On the further next day, after the precipitate was filtered, the solution was evaporated to reduce the solution amount from about 70 ml to 15 ml, and put in the refrigerator. After about one week, a large amount of yellow transparent solid was created mainly on the vessel wall.

This sample is referred to as sample (1).

Measurement of the cyclic voltammogram (CV) of sample (1) under the presence of methanol was carried out to investigate the methanol oxidation characteristic, thereby estimating its performance as a fuel cell catalytic electrode.

The measurement condition was as follows.
· Electrolyte: 0.5M H₂SO₄ was employed.
· Preparation of catalyst: A sample and acetylene black were mixed at a ratio of 20:80 by weight in a mortar.
· Method for fixing the catalyst: The catalyst was fixed by the technique by Schmidt et al (Schmit et al. J. Electrochem. Soc. 145, 2354 (1998)). The powder of the catalyst of 5 mg was dispersed in a 5 % NAFION solution of 0.5 ml. The solution of 12 µl was dropped on a glassy carbon electrode and dried at room temperature to provide a measuring sample. If the measuring sample is uniformly dispersed in the solution, the amount of the sample carried on the electrode is 0.12 mg.
· Methanol: 1 M
· The sweeping speed was set at 10 mV/s, and the sweeping potential was set at -0.2 V, +1.3 V, -0.2 V (vs Ag/AgCl), i.e., -0.001 V, +1.499 V and -0.001 V vs NHE.

This substitutive type polyacid was separated as solid insolubilized as partial salt by Na and carried on the carbon electrode surface to prepare a catalytic electrode.

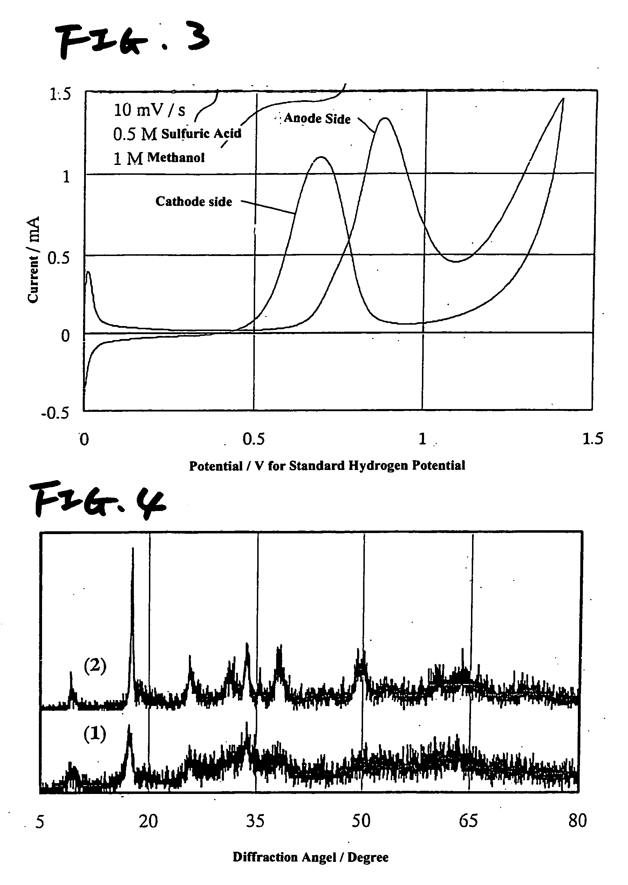

Fig. 2 shows the cyclic voltammogram pattern of the Pt-substituted Anderson type polyacid.

Great peaks appear in the vicinity of 0.85 V on the side of an anode, and in the vicinity of 0.65 V on the side of a cathode. This represents a pattern peculiar to the oxidation of methanol. The value of a methanol oxidation current was 1.177 mA. Because the polyacid contains the Pt atom inserted in one-atom substitution, although it contains the Pt atom with only 1/7 composition of W, the oxidation current flows in the same level as the Pt metal. As a result, it was found that the polyacid can provide a good catalytic characteristic.

The methanol oxidation current acquired through an experiment is in the same level as that of Pt metal. Thus, it is known that the above polyacid has a very excellent catalyst characteristic. Since any Pt in the polyacid exists on the polyacid cluster surface, any Pt becomes active. For this reason, it is considered that although the polyacid contains a very little amount of Pt, it exhibits high activity. By using this new catalyst, it has been verified that reduction in the amount of Pt to be used and effective use of the noble metal can be expected in the fuel cell electrode.

Next, the structure of this catalyst has been confirmed. It is known that in the case of the heteropolyacid, the powder XRD greatly depends on the contents of crystal water. The number of the crystal water greatly depends on the composing condition, particularly at room temperature. At high temperature, the dependency of the composing condition can be relatively reduced. The XRD analysis result based on the comparison between sample (1) and a standard sample (2) is shown in Fig. 4. The composed sample (1), although it has poor crystallinity, exhibits the same XRD spectrum as the sample (2). It is considered that Na₅H₃[PtW₆O₂₄].xH₂O that is substantially the same as the standard sample could be created.

As one of other mixed chemical species, there are Na₂[Pt(OH)₆] that is a starting substance and its acidic type H₂[Pt(OH)₆]. As a result of investigation of their XRD peaks, in the XRD pattern of Fig. 4, no diffraction peak was not detected from their impurity phase. Thus, it can be concluded that the composed sample is the Anderson type polyacid with purely substituted noble metal.

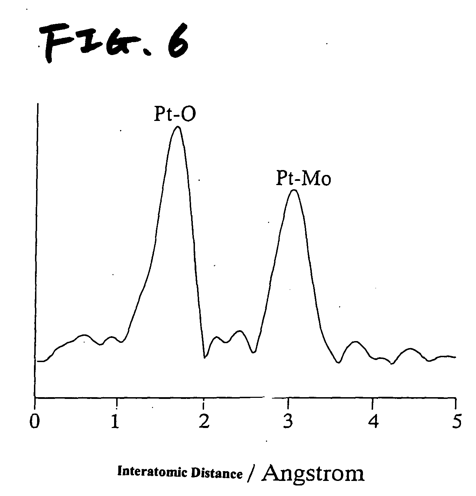

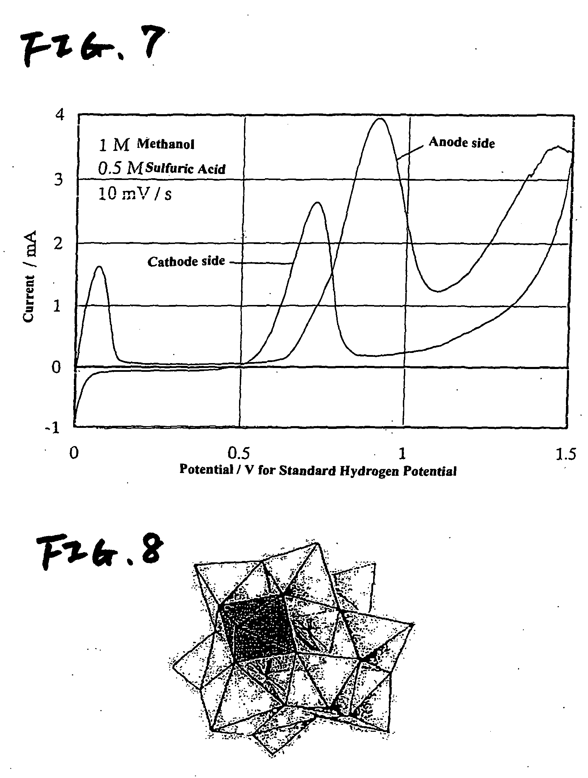

The molecular structure of the anion itself can be investigated by the infrared absorption (IR) and X-ray absorption edge fine structure (EXAFS). Fig. 5 shows the IR spectrum, and Fig. 6 shows the moving radius structure function acquired by EXAFS of molybdenum-system substance Na₅H₃[PtMo₆O₂₄].xH₂O having the same structure as that of tungsten-system Anderson type polyanion. The infrared absorption exhibited the absorption pattern peculiar to Anderson type [PtW₆O₂₄]⁻⁸ anion. Further, the information on the interatomic distance acquired by EXAFS agreed with that of the Anderson type [PtW₆O₂₄]⁻⁸ anion. Thus, it was found that the catalyst which exhibited the high activity for the electrochemical methanol reaction is the metal oxide molecule having the Anderson type structure, as intended.

### Na₅H₃[PtMo₆O₂₄].xH₂O (Anderson structure) (prepared by a reagent manufacturer)

In order to investigate if or not the industrial mass production of the Anderson type heteropolyacid can be realized, the composition of the substance at issue was requested to the reagent manufacture to confirm whether the substance exhibits the same activity.

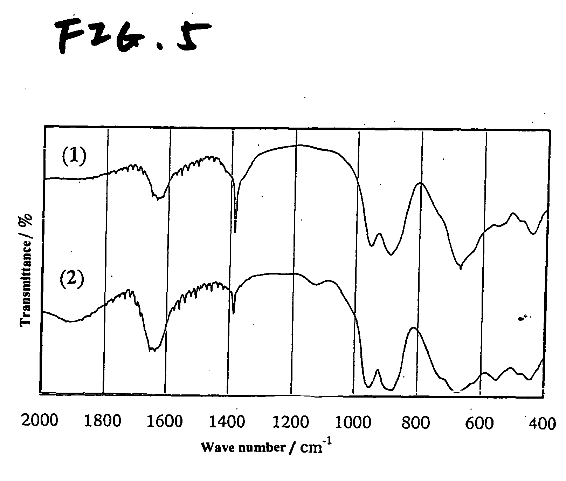

Fig. 3 shows the cyclic voltammogram pattern of the substance at issue. It has been found that the Anderson type heteropolyacid (referred to as sample (3)) prepared by the reagent manufacturer provides the same methanol oxidation activity. Thus, it was verified that the catalyst at issue has the property permitting the mass production.

### Example 2

### K₄H₂[α-SiPtW₁₁O₄₀] (α-Keggin structure 1 substitute)

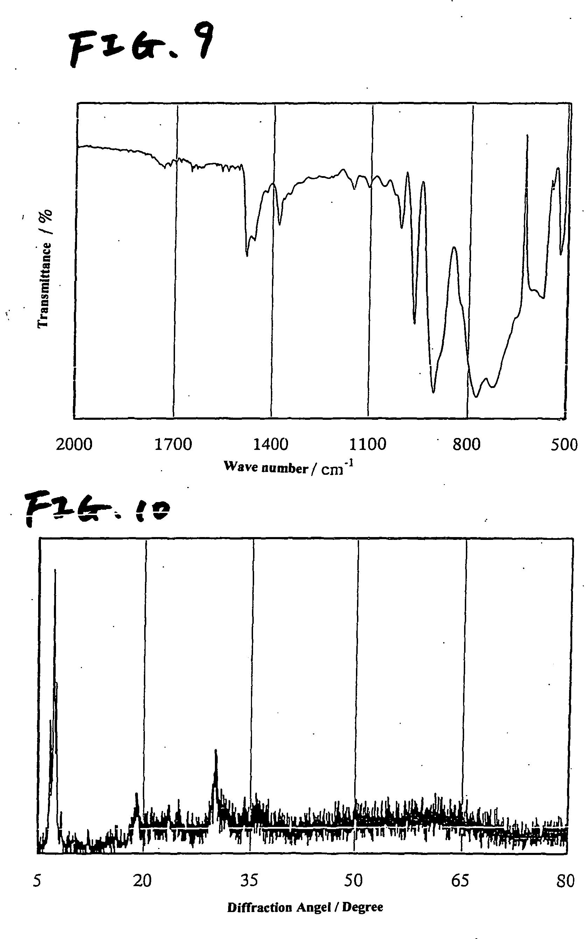

In Examples 2, 3, 4 and 5, Keggin type heteropolyacids were examined which have the structure shown in Fig. 8 in which a non-noble metal element such as Si and P is located as a tetrahedron of XO₄ at the center and W, Mo, etc. are arranged as 12 octahedrons of MO₆ on the periphery. Under the condition of low pH, the Keggin type heteropolyacid is stable in its structure in which 12 pieces of MO₆ are arranged. Under the condition of slightly high pH, it is stable in the structure in which 9 to 11 pieces of MO₆ are arranged, and 1 to 3 defective sites are present. At the defective sites, various metals can be taken in. The heteropolyacid having the structure in which various metals such as Mn, Fe and Ni are taken in is known. However, no composition example for Pt has been proposed. The Keggin type heteropolyacid includes isomers with different symmetries according to the manner of coupling the octahedrons, i.e., α type, β type and γ type. In Examples 2, 3 and 5, introduction of Pt into the α-type of one defector has been attempted. In Example 4, introduction of Pt into the γ-type of two defectors (hereinafter referred to as and γ-W10).

First, K₈[α-SiW₁₁O₃₉] .nH₂O that is a precursor was synthesized. It was prepared in the following procedure according to the reference (Inorg, Synth. vol, 27, 89 (1990)).

Na₂WO₄.2H₂O of 18.2 g (55 mol) was added to boiling water of 30 ml. 8M HCl was dropped to provide about pH = 8. To the solution thus prepared, a solution in which Na₂SiO₃.9H₂O of 8.52 g (30 mmol) is solved in water of 60 ml (i.e. Si: 5 mmol) was added. The solution shows an increased pH = 8.91 and showed white muddiness. 8M HCl was dropped again to provide pH = 5.16. The solution was heated for about two hours. On the next day, after filtering by a 0.1 µm filter, when KCl of 15 g was added to the filtered solution, a great amount of precipitate was created. The precipitate was filtered by the 0.1 µm filter. The precipitate was washed twice using 1M KCl water solution of 5 ml and washed once using cold water of 5 ml. Thereafter, the precipitate was air-dried.

The heteropolyacid with Pt inserted in the Keggin type polyanion had been yet reported. It was composed in the following procedure according to the reference (R. Neumann and C. Abu-Gnim, J. Am. Chem. Soc., 1990, 112, 6025) in which Ru is inserted using K₈[α-SiW₁₁O₃₉].nH₂O.

K₈[α-SiW₁₁O₃₉].nH₂O of 3 g was suspended in acetonitryl. An acetone solution of H₂PtCl₆.6H₂O of 0.47 g (about 0.9 mmol) was added. After having stirred the solution all night, it was filtered by the 0.1 µm filter. The precipitate was washed by acetone (to remove H₂PtCl₆.6H₂O) to give light-yellow solid. The solid of 1.43 g inclusive of crystal water was obtained. This substance is hereinafter referred to as sample (4).

The cyclic voltammogram (CV)of the sample (4) was measured in the presence of methanol under the same condition as in Example 1 to examine the methanol oxidation characteristic, thereby estimating its performance as the fuel cell catalytic electrode.

Fig. 7 shows the cyclic voltammogram pattern. In this sample also, great peaks appear in the vicinity of 0.85 V on the side of an anode, and in the vicinity of 0.65 V on the side of a cathode. This represents a pattern peculiar to the oxidation of methanol. The value of the methanol oxidation current was 3.947 mA. As described above, the carrying amount of the catalyst/acetylene black mixture is 1.2 mg, the rate of the catalyst in the mixture is 20 %, the molecular weight of (4) is 3860.3, the atomic weight of Pt is 195.08. The value of the oxidation current of methanol for the weight of Pt within the catalyst calculated on the basis of these values was as high as 3.947 mA/(1.2 mg * 0.2 * (195.08/3860.3)) = 325.4 A g⁻¹. Because the polyacid contains Pt atom inserted in one-atom substitution, although it contains the Pt atom with only 1/12 composition of W, the oxidation current flows in the same level as the Pt metal. As a result, it was found that the polyacid can provide a good catalytic characteristic.

In Example 2 also, like Example 1, since any Pt in the polyacid exists on the polyacid cluster surface, any Pt becomes active. For this reason, it is considered that although the polyacid contains a very little amount of Pt, it exhibits the high activity. On the basis of these experimental results, it was verified that a group of new substances substitutively doped with the Pt atom in the one atom level, which are substances different from the usual Pt metal and Pt alloy, have the catalyst activity equivalent to that of Pt. By using this new catalyst, it was verified that reduction in the amount of Pt to be used and effective use of the noble metal can be expected in the fuel cell electrode.

The structure of sample (4) was examined in the same manner as Example 1.

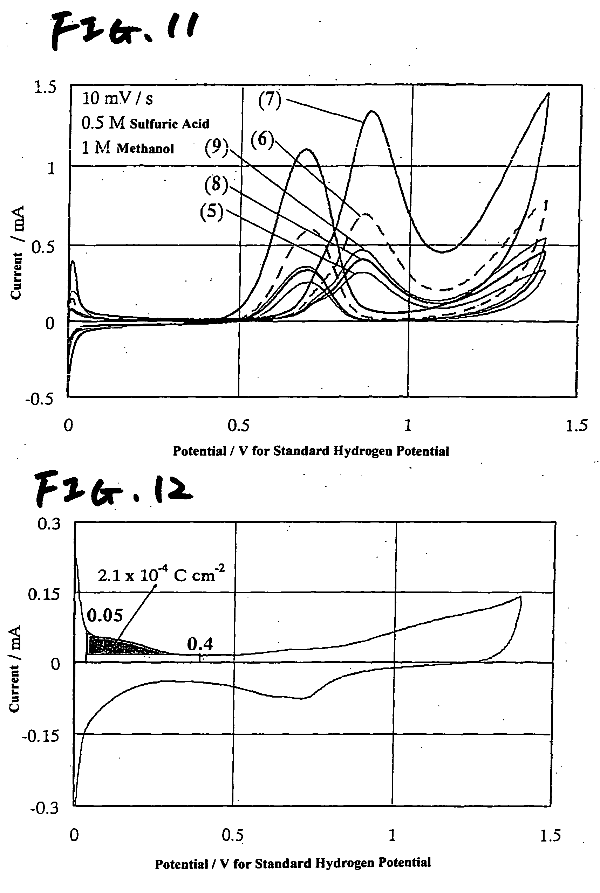

The IR is shown in Fig. 9. Strong absorption appears at 965, 905, 887, 781 and 727 cm⁻¹. In the case of the Keggin type polyacid with Si as a main element, since the absorption of IR appears in the vicinity of 965 cm⁻¹ for ν(W=0), 905 cm⁻¹ for ν (Si-O), 887 cm⁻¹ for ν(W-Ocorner-W) and 781 cm⁻¹ for ν(W-Oedge-W), it is considered that this polyacid (4) also holds the Keggin type structure.

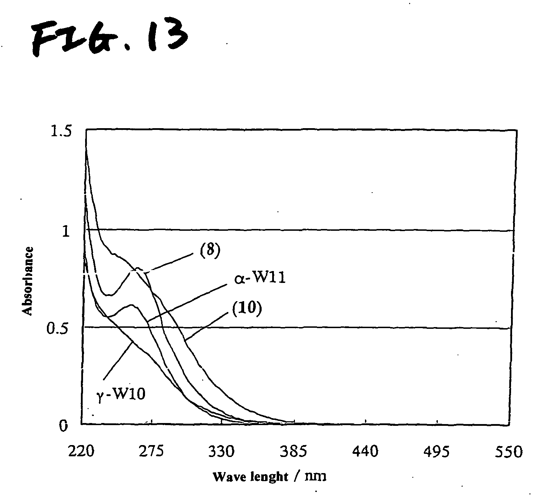

The powder XRD is shown in Fig. 10. It is suggested that H₂PtCl₆ that is a starting substance is not crystallized and Pt is taken in the polyacid. Although not shown in Fig. 10, in the EXAPS also, the LII absorption edge was observed. This shows that the substance at issue contains Pt.

### Example 3

First, the outline of each preparing method in Example 3 is shown in Table 1.

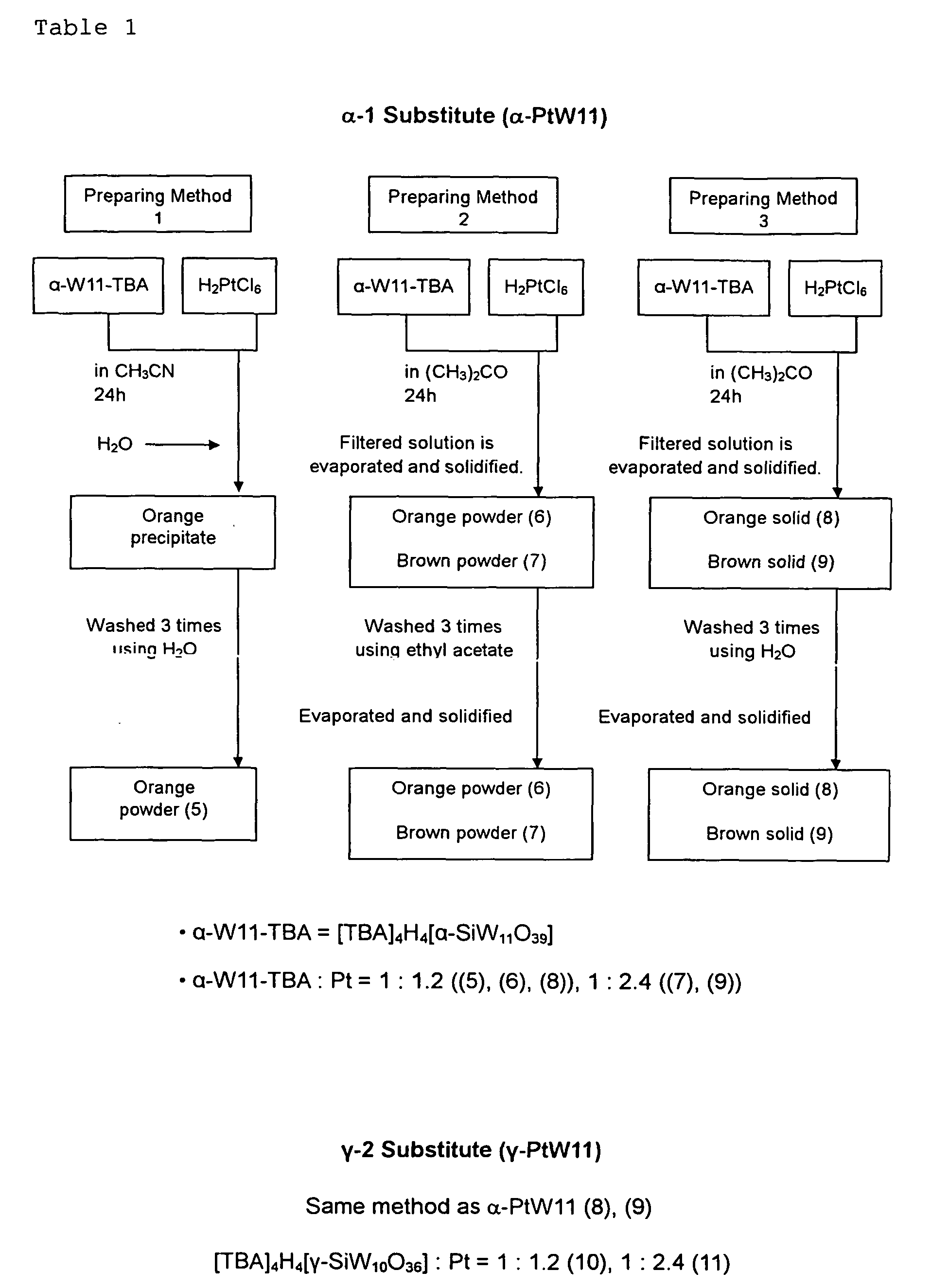

### [(n-C₄H₉)₄N]₄H2[α-SiPtW₁₁O₄₀] (α-Keggin structure 1 substitute)

Example 2 was directed to potassium salt. However, it is considered that tetrabutyl ammonium salt is more suitable from the view point of preventing the catalyst from being dissolved into an electrolyte. In order to make the suitable substitution of tetrabutyl ammonium for a cation, it was found that it is better to use the preparing method different from Example 2. The outline of each preparing method is shown in Table 1.
· Preparing method 1: After tetrabutyl ammonium salt of the α-type one defector and chloroplatinate hexahydrate have been dissolved in acetonitryl, a large amount of water is added. The precipitate thus obtained is washed using water to remove the chloroplatinate hexahydrate not taken in.
· Preparing method 2: After a raw material has been dissolved in acetone, the solution is evaporated and solidified by an evaporator. The solid thus obtained is washed using ethyl acetate without using water.
· Preparing method 3: After a raw material has been dissolved in acetone, the solution is evaporated and solidified by an evaporator. Now, the solid thus obtained is washed using water.

The contents of Pt, W, etc. by the ICP method are shown in Fig. 2. In the case of the α-1 substitute, in sample (5) prepared by the preparation method 1, the amount of Pt is about half of the stoichiometry. In samples (6) and (7) prepared by the preparing method 3, excessive Pt remains. In both samples (8) and (9) prepared by the preparing method 3, the amount of Pt substantially equal in the stoichiometry is contained in the polyacid.

**Table 2**

| | W | Pt | C | H | N |
|---|---|---|---|---|---|
| *(TBA)*_{*5*}*H[α-SiPtW*_{*11*}*O*_{*40*}*]* | *49.3* | *4.8* | *23.4* | *4.5* | *1.7* |
| (5) | 50.4 | 2.5 | 22.8 | 4.4 | 1.6 |
| (6) | 39.2 | 6.6 | 20.1 | 3.6 | 1.5 |
| (7) | 40.4 | 8.2 | 18.8 | 3.5 | 1.5 |
| (8) | 44.9 | 5.0 | 22.2 | 4.0 | 1.6 |
| (9) | 43.2 | 4.4 | 22.5 | 4.0 | 1.6 |
| *(TBA)*_{*5*}*H*_{*3*}*[γ-SiPt*_{*2*}*W*_{*10*}*O*_{*40*}*]* | *44.7* | *9.5* | *23.4* | *4.4* | *1.7* |
| (10) | 44.2 | 4.8 | 22.1 | 4.0 | 1.6 |
| (11) | 41.9 | 5.7 | 22.2 | 3.9 | 1.8 |
| (Calculated Value for *Italic)* | | | | | |

The cyclic voltammogram (CV) of each of samples (5), (6), (7), (8) and (9) in the presence of methanol was measured to estimate the performance as the fuel cell catalytic electrode. For more suitable estimation, the preparation of the catalyst and its fixing on the electrode are carried out as follows. After the polyacid had been dissolved in acetonitryl, graphite was mixed. The solution was dried at 70°C, and baked for two hours in an atmosphere of nitrogen at 200°C. The sample thus created was suspended in ethanol and 5% Naflon solution again. The solution was dropped onto the electrode and dried. Thus, the methanol oxidation current values are under the condition different from Examples 1 and 2. So these values cannot be directly compared with these Examples. The other condition is the same as Example 1.

The cyclic voltammogram of each of these heteropolyacids is shown in Fig. 11. In Example 3 also, although the polyacid contains a very little amount of Pt, it exhibits the same high activity as the case of Pt metal. In the sample (9) carrying the large amount of Pt, the oxidation current starts to flow from a lower potential side than the Pt metal to provide a decreased over-voltage.

Fig. 3 shows the peak current value due to the methanol oxidation of each of these heteropolyacids in the vicinity of 0.86 V, Pt weight rate in the catalyst after mixed with graphite and the peak current value for the Pt weight. Any heteropolyacid, although the Pt weight rate is 2% or less, exhibited the high methanol oxidation current value. Further, any heteropolyacid exhibits the methanol oxidation current value for the Pt weight which is as high as three to eight times as that of the Pt metal (particle diameter of 1 to 2 µm). Some samples exhibits the value converted for a reactive surface area (the measuring method will be described in the next paragraph [0011-3]) which is near to that of the Pt metal or Pt 30 wt %/Vulcan XC-72R although they are oxide. As a result, it has been verified that these polyacids are hopeful as the new methanol oxidation anode catalyst with a low content of Pt.

### Electrochemical reacting surface area measuring method

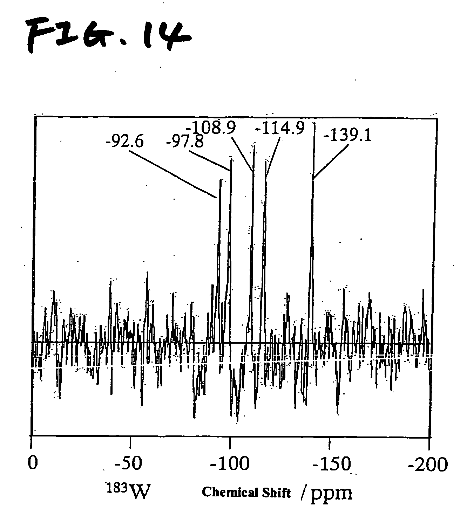

An explanation will be given of the electrochemical reacting surface area measuring method of Pt which has been employed in Examples 3 and 4 and Comparative Example 2. Under the condition with no methanol and the other same condition as in Example 3, the cyclic voltammogram was measured. A typical cyclic voltammogram is shown in Fig. 12. On the basis of this cyclic voltammogram, the amount of electricity having flowed from the area in the range of 50 to 400 mV on the anode side versus NHE by the hydrogen-free wave was calculated and at 2.1 x 10⁻⁴C cm⁻², the reacting surface area was computed.

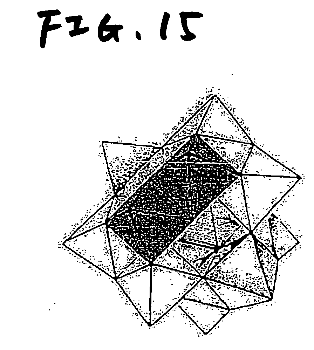

Characterization of these heteropolyacids was also carried out. The UV spectra thus obtained is shown in Fig. 13. It was reported that the Keggin type heteropolyacid provides different UV spectra as shown here according to different α-type, β-type and γ-type of structures. As regards the samples obtained in this Example, the α-type before introduction of Pt remains the α-type after the introduction (This applies to the γ-type). Thus, it was exhibited that the structure of the polianion is held on the basis of the UV spectra. The IR spectrum also, although not shown, shows the same characteristic as in Example 2. From this fact, it was ascertained that the Keggin type heteropolyacids were obtained. The ¹⁸³W NMR spectrum of (5) is shown in Fig. 14. As seen, five signals with equal strengths were observed between -92.6 ppm and - 139.1 ppm. It shows that there are five sites of equivalent W. It shows that W of the polianion holds the structure [α-SiW₁₁O₃₉]⁸⁻ before Pt introduction. It is considered that eleven tungstens of the polyanion includes five sites of two equivalent tungstens and one site of one equivalent tungsten, and only two sites are seen owing to the S/N ratio.

### Example 4

### [(n-C₄H₉)₄N]₄H₄[γ-SiPt₂W₁₀O₄₀] (γ-Keggin structure 2 substitute)

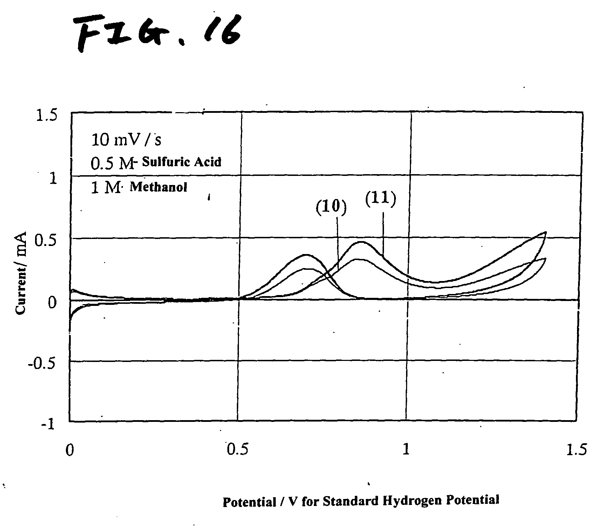

The preparation of the samples with Pt introduced into the γ-Keggin structure having two defective sites (Fig. 15) was investigated. The preparing method was implemented according to the preparing method 3 in Example 3. These samples are referred to as samples (10) and (11). The measurement of the cyclic voltammogram (CV) of the samples (10) and (11) in the presence of methanol was carried out under the same condition as in Example 3.

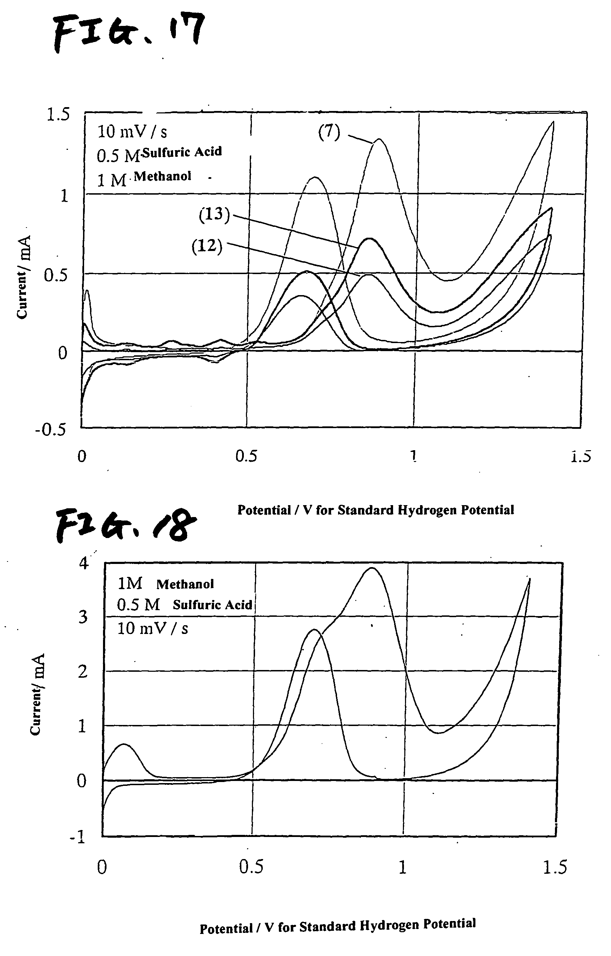

The cyclic voltammogram of these samples is shown in Fig. 16. In Example 4 also, the samples exhibits, although it contains a very little amount of Pt, the methanol oxidation activity. However, this methanol oxidation activity is lower than that in Example 3. The reasons therefor are as follows. First, as shown in Table 2, Pt actually introduced in the heteropolyacid was one for one polyanion and 1/2 that is a theoretical value. Secondly, presumably, the oriented status of Pt influences the methanol oxidation activity.

### Example 5

### [(n-C₄H₉)₄N]₄H[α-PPt₂Mo₁₁O₄₀] (γ-Keggin structure, constituent atom P-Mo)

In the past, as catalysts of oxidation-reduction reaction, there were many examples of using the heteropolyacid in the skeleton of Mo having a higher Redox capability. In Example 5, the sample with Pt introduced in the heteropolyacid in the Mo skeleton was investigated. The preparing method was implemented by two methods of the preparing method 3 in Example 3 and the following preparing method 4.
. Preparing method 4: Monocrysllization is done. A acetonytryl-toluen solution of defective type polyacid and chloroplatinate water solution are violently stirred by a separating funnel to extract an organic layer. The solution is left calmly at room temperature for one week. The deposited crystal is collected.

The sample prepared by the preparing method 3 is referred to as sample (12) and the sample prepared by the preparing method 4 is referred to as sample (13). The measurement of the cyclic voltammogram (CV) of the samples (12) and (13) in the presence of methanol was carried out under the same condition as in Example 3. The result is shown in Fig. 17.

In the case of P-Mo system heteropolyacid, on the side of an anode, great peaks appear in the vicinity of 0.14 V, 0.28 V, 0.42 V and 0.53 V. This polyacid has a different CV from that of Pt/Vulcan-72R. This may be attributed to that Pt in this polyacid is inserted in a status different from metal. The large oxidation waves may be attributed to the oxidation of the polyacid itself. For this reason, in this system, the method of computing the reaction surface area of Pt cannot be implemented. Therefore this system is not shown in Table 3.

The P-Mo system Pt-contained heteropolyacid also exhibited the methanol oxidation activity. However this activity is lower than that in Examples 2, 3 and 4. This system does not provide the cooperating effect with the oxidation-reduction capability of Mo.

### Comparative Example 1

### PtRu alloy particles

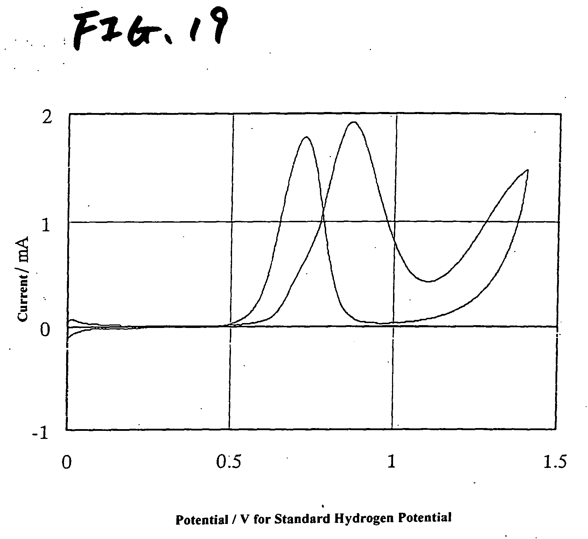

The cyclic voltammogram of PtRu alloy particles, which are being presently mainly employed for the electrochemical methanol oxidation reaction, was measured in the same method as in Examples 1 and 2 to measure the methanol oxidation activity. Fig. 18 shows its cyclic voltammogram pattern. The value of the methanol oxidation current was 3.899 mA. The methanol oxidation current for the Pt weight in the catalyst computed by the same computing method as Example 2 was 3.899 mA/(1.2 mg * 0.2 * 0.5) = 32.49 A g⁻¹. The value (325.4 A g⁻¹) of the substance identified in Example 2 is ten times as large as this value. For this reason, it was verified that the substance identified in the present invention exhibits the excellent characteristic for the electrochemical methanol oxidation reaction as compared with the PtRu alloy particles.

### Comparative Example 2

### Pt particles

The cyclic voltammogram of Pt particles (particle diameter 1 µm), which are being presently mainly employed for the electrochemical methanol oxidation reaction like the PtRu alloy particles, was measured in the same method as in Examples 3, 4 and 5 to measure the methanol oxidation activity. Examples 1 and 2 are different from Examples 3, 4 and 5 in their measurement conditions. In order to compare Examples 3, 4 and 5 with a present technology, the measurement for Comparative Example 2 was carried out. Fig. 19 shows its cyclic voltammogram pattern. The value of the methanol oxidation current was 3.899 mA. Further, the methanol oxidation current, the methanol oxidation current for the Pt weight and the methanol oxidation current for the Pt reactive surface area were measured in the same method as in Examples 3 and 4. These results are shown in Table 3.

For example, in comparison on the peak current for the Pt weight, the value (3.28 x 10⁵ mA g⁻¹) of sample (7) identified in Example 3 of the present invention is about eight times as large as that (3.84 x 10⁴ mA g⁻¹) of the substance in this Comparative Example 2. For this reason, it was verified that the substance identified in the present invention exhibits the excellent characteristic for the electrochemical methanol oxidation reaction as compared with the Pt alloy particles which are presently mainly adopted.

### Comparative Example 3

### Pt/Vulcan XC-72R

In Comparative Example 2, the metal particles of Pt were employed. However, at present, as an electrode catalyst technique, an increase in the surface area by carrying the substance onto carbon carriers such as Vulcan XC-72 is being attempted. Comparison was also made with this technique. The physical values in this case were computed and shown in Table 3.

For example, in comparison on the peak current for the Pt surface area, the value (0.438 mA cm⁻²) of the sample (6) identified in Example 3 of the present invention is approximately equal to the value (0.555 mA cm⁻²) of the substance in this Comparative Example 3. For this reason, it was verified that the substance identified in the present invention exhibits the excellent characteristic for the electrochemical methanol oxidation reaction not inferior to the Pt/Vulcan XC-72R which is the technique mainly employed at present.

The data on the methanol oxidation current and its normalization of each heteropolyacid in Example 3, Example 4 and Comparative Example 2 are summarized in Table 3.

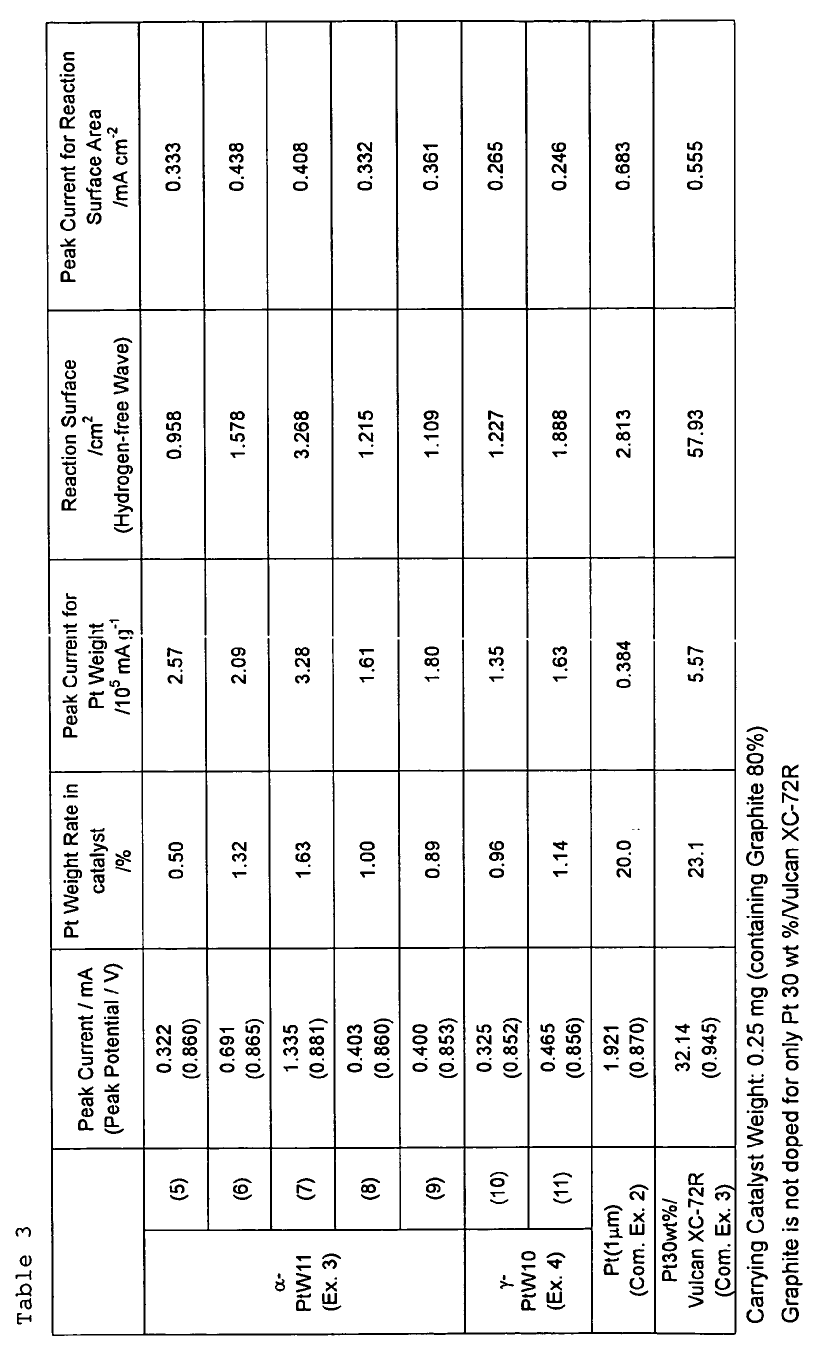

### INDUSTRIAL APPLICABILITY

The present invention provides new materials as an electrode catalyst of the electrochemical reaction. These materials are a catalysts each having a new structure with a noble metal atom such as platinum (Pt) or ruthenium (Ru) substitutively inserted in each of solid polyacids in one atomic level at the site of, e.g., a W site. It is considered that these substitutive type solid polyacids serve as fuel cell electrode catalysts with the contents of the noble metal greatly reduced. It is considered that the present invention realizes great reduction in cost of the electrode catalyst which occupies the high cost as a constituent material of the fuel cell, and contributes to the spread of the fuel cells which have been outspritted in the spread because of their high cost although they provide remarkably smaller load to earth environment than internal combustion engines do. Further, it is expected that the catalyst with excellent CO poisoning resistance can be easily designed because of easiness of control of constituent elements and sites. So the present invention can be applied to the catalytic electrode for the direct methanol type fuel cell which has been widely noticed in recent years as the power source for mobile devices. The solid polyacid doped substitutively doped with a different atom, e.g. Pt in its skeleton, fabricated according to the present invention is useful as a high performance catalytic electrode having both unique catalytic characteristic and high Pt using rate. So, it is expected that the catalyst with excellent CO poisoning resistance can be easily designed because of easiness of control of the constituent elements and sites. Thus, the present invention can be applied to the catalytic electrode for the direct methanol type fuel cell which has been widely noticed in recent years as the power source for mobile devices.

## Claims

1. A solid heteropolyacid catalyst for a fuel cell, which is a partial salt of a heteropolyacid including a noble metal and/or a transition metal and having a molecular weight of 800 to 10000.

2. The solid heteropolyacid catalyst for a fuel cell according to claim 1,
wherein the noble metal is at least one selected from the group consisting of Ru, Rh, Pd, Ag, Ir, Pt and Au, and the transition metal is at least one selected from the group consisting of Ti, V, Cr, Mn, Fe, Co, Ni, Cu, Zn, Y, Zr, Nb, Mo, Ta and W.

3. The solid heteropolyacid catalyst for a fuel cell according to claim 1 or 2,
wherein the partial salt is a partial salt with an alkali metal or an alkali earth metal, a partial salt with an organic ammonium ion, or a partial salt insolubilized in water by a salt formation with a general cation (positive ion).

4. The solid heteropolyacid catalyst for a fuel cell according to any one of claims 1 to 3,
wherein the heteropolyacid is a polyacid having the Keggin structure, the Anderson structure or the Dawson structure.

5. The solid heteropolyacid catalyst for a fuel cell according to any one of claims 1 to 4,
wherein one atom of the noble metal is substituted in a skeleton of the heteropolyacid.

6. The solid heteropolyacid catalyst for a fuel cell according to claim 5,
wherein the atom of the noble metal is one selected from the group consisting of Ru, Rh, Pd, Ag, Ir, Pt and Au.

7. An electrode for a fuel cell **characterized in that** the solid heteropolyacid for a fuel cell according to any one of claims 1 to 6 is held on a surface of a carbon electrode.

8. An electrode for a fuel cell **characterized in that** a mixture of the solid heteropolyacid for a fuel cell according to any one of claims 1 to 6, conductive powder and a binder is molded.

9. The electrode for a fuel cell according to claim 8,
wherein the conductive powder is carbon powder or metal powder.

10. The electrode for a fuel cell according to claim 8 or 9,
wherein the binder is an organic polymer binder and/or an inorganic binder.
